Europäisches Patentamt

European Patent Office

Office européen des brevets

(19)

(11) Veröffentlichungsnummer: **0 035 691**
**B1**

(12) **EUROPÄISCHE PATENTSCHRIFT**

(45) Veröffentlichungstag der Patentschrift:
15.06.83

(51) Int. Cl.³: **F 02 B 37/12**

(21) Anmeldenummer: **81101333.3**

(22) Anmeldetag: **25.02.81**

(54) **Ladedruck-Regelvorrichtung für Brennkraftmaschinen.**

(30) Priorität: **07.03.80 DE 3008802**

(43) Veröffentlichungstag der Anmeldung:
**16.09.81 Patentblatt 81/37**

(45) Bekanntmachung des Hinweises auf die Patenterteilung:
**15.06.83 Patentblatt 83/24**

(84) Benannte Vertragsstaaten:
**AT DE FR GB IT SE**

(56) Entgegenhaltungen:
**DE-A-2 362 133**
**DE-A-2 716 470**
**FR-A-2 392 230**
**FR-A-2 446 923**
**FR-A-2 449 837**
**GB-A-1 552 505**

(73) Patentinhaber: **BAYERISCHE·MOTOREN WERKE Aktiengesellschaft, Postfach 40 02 40, D-8000 München 40 (DE)**

(72) Erfinder: **Kohlhepp, Wolfgang, Dipl.-Ing., Amalienstrasse 51, D-8000 München 40 (DE)**

(74) Vertreter: **Schweiger, Erwin, Bayerische Motoren Werke Aktiengesellschaft Postfach 40 02 40 Petueiring 130 - AJ-20, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Ladedruck-Regelvorrichtung für Brennkraftmaschinen

Die Erfindung bezieht sich auf eine Ladedruck-Regelvorrichtung der im Oberbegriff des Anspruches 1 beschriebenen Bauart.

Bei einer bekannten Ladedruck-Regelvorrichtung dieser Bauart (DE-A-2 650 033) arbeitet der Stellantrieb unabhängig vom Umgebungsdruck, weil die Schließseite des Stellantriebes mit vom Ladedruck abgeleitetem Steuerdruck und die Öffnungsseite mit dem Ladedruck beaufschlagt wird. Doch kann der Umgebungsdruck auf die Drucksteuervorrichtung derart einwirken, daß mit sinkendem Umgebungsdruck auch der Steuerdruck und damit der Ladedruck sinkt. Dadurch ergibt sich eine verschlechterte Füllung, so daß Leistung und Drehmoment der Brennkraftmaschine abfallen. Eine weitere Füllungsverschlechterung tritt bei steigender Umgebungstemperatur durch geringere Dichte der Ansaugluft auf. Ferner wird die Füllung gezielt dann in zunehmendem Maße verringert, wenn die Temperatur des Zylinderkopfes einen bestimmten Wert übersteigt.

Der Erfindung liegt die Aufgabe zugrunde, eine Ladedruck-Regelvorrichtung der im Oberbegriff des Anspruches 1 beschriebenen Bauart zu schaffen, die bei Änderungen des Umgebungsdruckes und der Umgebungstemperatur eine gleichbleibend hohe Füllung und damit auch Leistung der Brennkraftmaschine gewährleistet.

Diese Aufgabe löst die Erfindung durch die kennzeichnenden Merkmale des Anspruches 1.

Den Gegenstand der Erfindung weiter ausbildende Merkmale sind in den Unteransprüchen gekennzeichnet. Die Merkmale der Ansprüche 2 und 3 gleichen den Einfluß der Umgebungstemperatur durch erhöhten bzw. verringerten Steuerdruck aus. Durch die Merkmale der Ansprüche 3 bis 6 ist eine Ladedruck-Regelvorrichtung der beschriebenen Art mit mechanischen Mitteln weitergebildet, während die Ansprüche 7 bis 9 eine elektronische Ausbildung der Vorrichtung beinhalten.

Die Erfindung ermöglicht es, Umgebungseinflüsse auf den Ladedruck auszuschalten, so daß auch bei wechselnden Umgebungseinflüssen stets die dem jeweiligen Betriebszustand der Brennkraftmaschine entsprechend vorbestimmte Füllung bzw. Höchstleistung erreicht wird.

In der Zeichnung sind Ausführungsbeispiele der Erfindung schematisch dargestellt, anhand deren die Erfindung nachstehend erläutert wird. Es zeigt

Fig. 1 eine Ladedruck-Regelvorrichtung mit einer mechanischen Drucksteuervorrichtung für Brennkraftmaschinen mit Abgasturbolader,

Fig. 2 eine andere Ausführungsform der mechanischen Drucksteuervorrichtung nach Fig. 1 und

Fig. 3 eine Ladedruck-Regelvorrichtung entsprechend Fig. 1 mit einer elektronischen Drucksteuervorrichtung.

Eine nicht dargestellte Brennkraftmaschine weist einen Abgasturbolader 1 auf, der aus einem Ladegebläse 2 und einer Abgasturbine 3 besteht. Zur Abgasturbine 3 führt eine an die Brennkraftmaschine angeschlossene Abgasleitung 4 und zum Abführen der Abgase weist die Abgasturbine 3 eine Auspuffleitung 5 auf. An die Eintrittsseite des Ladegebläses 2 ist ein Saugrohr 6 angeschlossen und der Austritt des Ladegebläses 2 mündet in eine Ladeluftleitung 7. Parallel zur Abgasturbine 3 ist eine Bypass-Leitung 8 angeordnet, die die Abgasleitung 4 und die Auspuffleitung 5 an der Eintritts- bzw. Austrittsseite der Abgasturbine 3 direkt miteinander verbindet. In der Bypass-Leitung 8 ist ein Bypass-Ventil 9 mit einem vom Abgasdruck beaufschlagten Ventilteller 10 angeordnet. Das Bypass-Ventil 9 weist einen Stellantrieb 11 auf, der je eine durch eine Membrane 12 voneinander getrennte Öffnungs- und Schließkammer 13 bzw. 14 umfaßt. Die Membrane 12 ist direkt mit dem Ventilschaft 15 des Bypass-Ventils 9 verbunden. In der Schließkammer 14 ist eine in Schließrichtung wirkende Schließfeder 16 angeordnet, die sich einerseits an einer Gehäusewand 17 des Stellantriebes 11 abstützt und andererseits in Schließrichtung auf die Membrane 12 einwirkt.

Eine unmittelbar in der Nähe des Austrittes des Ladegebläses 2 an die Ladeluftleitung 7 angeschlossene Leitung 18 führt zur Öffnungskammer 13 des Stellantriebes 11, in der der Ladedruck in Öffnungsrichtung des Bypass-Ventiles 9 wirkt. Eine von dieser Leitung 18 abgehende Zweigleitung 19 führt zu einer Drucksteuervorrichtung 20, die über eine Steuerleitung 21 mit der Schließkammer 14 des Stellantriebes 11 verbunden ist.

Die Drucksteuervorrichtung 20 umfaßt ein Gehäuse 22 mit einer Kammer 23, in der eine geschlossene Druckdose 24 befestigt ist. An einer Stirnseite der Druckdose 24 ist ein Ventilkörper 25 angeordnet, der zusammen mit einem Ventilsitz 26 in der gegenüberliegenden Wand 27 des Gehäuses 22 ein Abblaseventil bildet. An die Kammer 23 sind die Zweigleitung 19 und die zum Stellantrieb 11 führende Steuerleitung 21 angeschlossen. Der Ventilsitz 26 ist am Ende einer Buchse 28 ausgebildet, die dichtend in der Wand 27 der Kammer 23 angeordnet und durch einen Bimetallstreifen 29 koaxial zum Ventilkörper 25 verschiebbar ist. An der Mündung der Zweigleitung 19 in die Kammer 23 ist eine Drossel 30 angeordnet, um eine Dämpfung im Ansprechverhalten der Drucksteuervorrichtung 20 zu erreichen.

Steigt beim Betrieb der Brennkraftmaschine der Ladedruck in der Kammer 23 über den in der Druckdose 24 herrschenden Druck an, so wird der an deren Stirnseite angeordnete Ventilkörper 25 von seinem Ventilsitz 26 abgehoben und Luft abgeblasen, so daß unbeeinflußt vom jeweiligen Umgebungsdruck ein konstanter Steuerdruck zur Verfügung steht, der im Stellantrieb 11 des Bypass-Ventiles 9 in Schließrichtung wirkt. Bei steigender Umgebungstemperatur wird der Ventilsitz 26 bzw. die Buchse 28 durch den Bimetallstreifen 29 in Richtung auf den Ventilkörper 25 zu bewegt und bei sinkenden Umgebungstemperaturen in umgekehrter Richtung. Die dabei auftretenden Verschiebewege sind relativ klein. Auf diese Weise ergibt sich eine Steuerdruckänderung derart, daß das Bypass-Ventil 9 bei steigender Umgebungstemperatur bis zu einem höheren Druck geschlossen gehalten wird und bei sinkender Umgebungstemperatur bei niedrigerem Druck geöffnet wird. So wird unabhängig vom Umgebungsdruck und unter Berücksichtigung der Umgebungstemperatur ein im wesentlichen gleichbleibender Höchstwert des Ladedruckes und damit auch der Füllung und Leistung der Brennkraftmaschine erzielt.

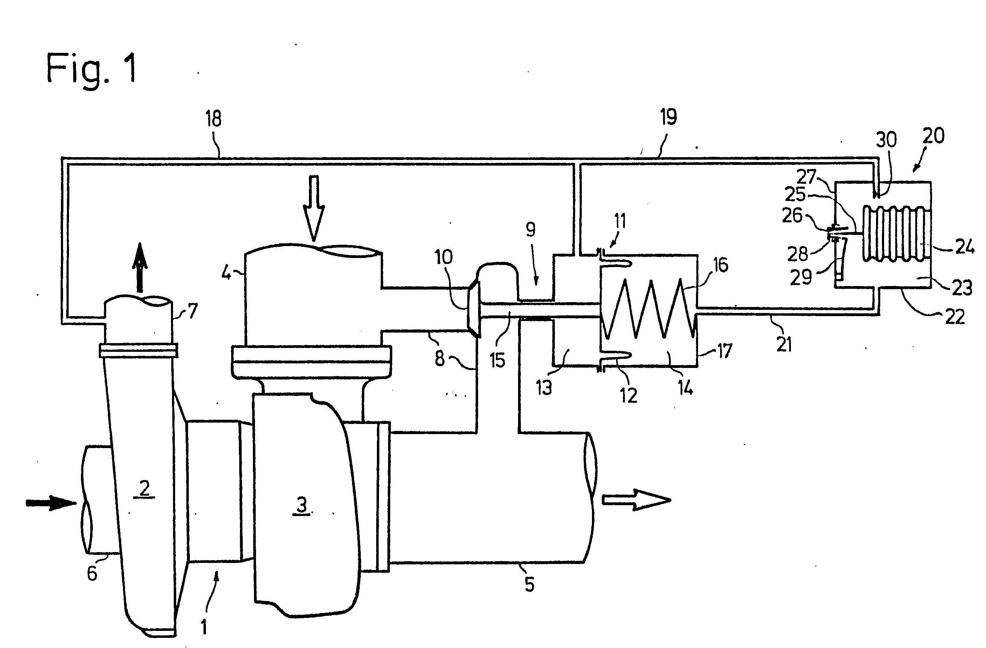

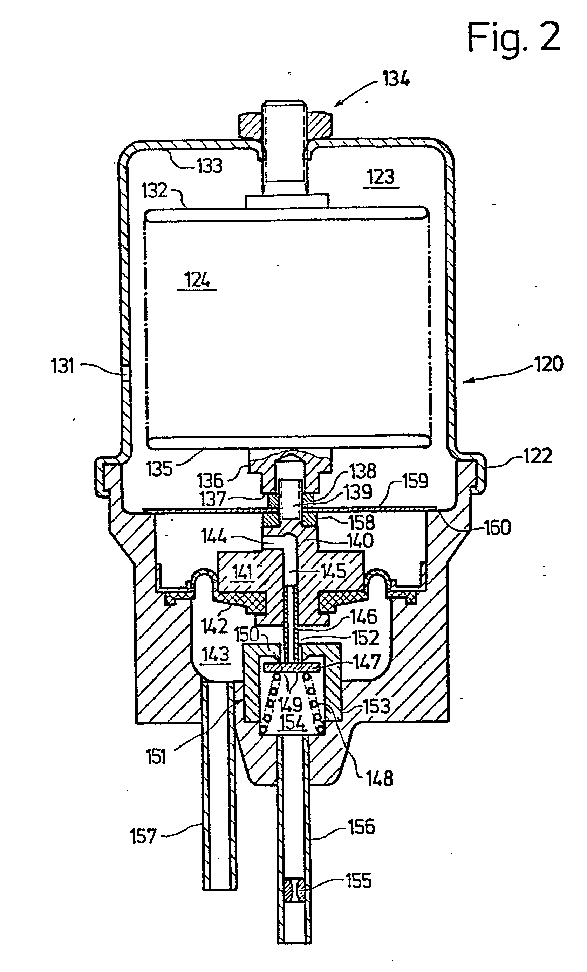

Die in Fig. 2 dargestellte Ausführungsform einer Drucksteuervorrichtung 120 hat im wesentlichen die gleiche Wirkung wie die in Fig. 1 dargestellte. Im Aufbau weist sie jedoch Unterschiede auf. Eine geschlossene Druckdose 124 ist in einer Kammer 123 eines Gehäuses 122 angeordnet. Diese Kammer 123 steht über eine Bohrung 131 mit der umgebenden Atmosphäre in Verbindung, so daß die Druckdose 124 dem Umgebungsdruck ausgesetzt ist. An einem Ende der Kammer 123 ist die Druckdose 124 über ihre eine Stirnseite 132 durch eine in der benachbarten Wand 133 befestigte verstellbare Vorspanneinrichtung 134 abgestützt. An der anderen Stirnseite 135 der Druckdose 124 ist ein hohler Ansatz 136 befestigt. Der Ansatz 136 liegt mit seiner ringförmigen freien Stirnfläche 137 an einer Mutter 138 an, die auf einen Gewindezapfen 139 geschraubt ist. Der Gewindezapfen 139 ist an einem konzentrischen Ansatz 140 eines Kolbens 141 ausgebildet, der mittels eines ringförmigen Rollbalges 142 im Gehäuse 122 befestigt ist, so daß von der Kammer 123 eine Steuerkammer 143 abgetrennt ist. Der konzentrische Ansatz 140 weist eine radiale Bohrung 144 auf, die eine vom anderen Ende des Kolbens 141 her eingebrachte konzentrische Sackbohrung 145 anschneidet. Im offenen Ende der Sackbohrung 145 ist ein Röhrchen 146 befestigt, dessen offenes Ende an einer Ventilplatte 147 anliegt, die durch eine Feder 148 gegen einen konzentrischen, kreisringförmigen Ventilsitz 149 gedrückt wird. Der Ventilsitz 149 ist an der Innenseite des Bodens 150 eines umgekehrt becherförmigen Teiles 151 ausgebildet. Im Boden 150 ist konzentrisch zum Ventilsitz 149 ein Durchlaß 152 ausgebildet, dessen Durchmesser größer als der Außendurchmesser des hindurchragenden Röhrchens 146 ist, so daß ein ringförmiger Durchtrittsquerschnitt verbleibt. Der Durchmesser der Ventilplatte 147 ist kleiner als der Innendurchmesser des umgekehrt becherförmigen Teiles 151, das eingesetzt in ein Sackloch 153 im Gehäuse eine Federkammer 154 bildet, in die ein mit einer Drossel 155 versehener Rohrstutzen 156 mündet. Dieser Rohrstutzen 156 wird an die Zweigleitung 19 (Fig. 1) angeschlossen. Parallel zu diesem Rohrstutzen 156 mündet in die Steuerkammer 143 ein weiterer Rohrstutzen 157, an den die Steuerleitung 21 (Fig. 1) angeschlossen wird.

Zwischen dem Ansatz 140 des Kolbens 141 und der aufgeschraubten Mutter 138 sind Ausgleichsbeilagen 158 und ein Bimetallstreifen 159 befestigt. Der Bimetallstreifen 159 liegt mit seinen Enden auf einer Ringschulter 160 im Gehäuse 122 auf.

Solange in der Steuerkammer 143 und damit gemäß Fig. 1 in der Steuerleitung 21 und der Schließkammer 14 des Stellantriebes 11 der Druck unterhalb eines bestimmten Wertes liegt, und dadurch die von der Steuerkammer 143 her wirkende Kraft auf den Kolben 141 kleiner als die durch die Druckdose 124, den Bimetallstreifen 159 und den Umgebungsdruck in der Kammer 123 auf den Kolben 141 einwirkende Kraft ist, wird die Ventilplatte 147 durch das in der Sackbohrung 145 des Kolbens 141 befestigte Röhrchen 146 von ihrem kreisringförmigen Ventilsitz 149 abgehoben. Damit kann Ladeluft in die Steuerkammer 143 strömen. Wenn der Druck in der Steuerkammer 143 den Sollwert erreicht, sind die Kräfte ausgeglichen und die Ventilplatte 147 wird gegen ihren Ventilsitz 149 gedrückt. Ist die von der Steuerkammer 143 her auf den Kolben 141 wirkende Kraft infolge höheren Druckes größer als die von der entgegengesetzten Seite her auf den Kolben 141 wirkende Gesamtkraft, so wird das Röhrchen 146 mit dem Kolben 141 von der Ventilplatte 147 abgehoben, so daß die Steuerkammer 143 mit der Kammer 123 und damit mit der Umgebungsluft in Verbindung steht. Nach erfolgtem Druckausgleich liegt das freie Ende des Röhrchens 146 wieder an der Ventilplatte 147 an und die Steuerkammer 143 ist erneut von der anderen Kammer 123 getrennt. Fallender Umgebungsdruck und damit ein Ausdehnen der Druckdose 124 und/oder steigende Umgebungstemperatur und ein dadurch eintretendes Entspannen des Bimetallstreifens 159 erzeugen eine Kraft, die die Ventilplatte 147 von ihrem ringförmigen Ventilsitz 149 abhebt und damit zu einem höheren Steuerdruck führt. Eine Erhöhung des Umgebungsdruckes und/oder eine Verringerung der Umgebungstemperatur führen in entsprechender Weise zu einer Herabsetzung des Steuerdruckes.

Der Bimetallstreifen 159 ist nur bis zu einer bestimmten erhöhten Temperatur wirksam und hebt dann von der Ringschulter 160 ab, da sonst zu hohe Ladedrücke auftreten könnten, die ein Klingeln in den Brennräumen der Brennkraftmaschine bewirken würden. Die dem Umgebungsdruck ausgesetzten wirksamen Flächen des Kolbens 141 und der Druckdose 124 sind in ihren Maßen so aufeinander abgestimmt, daß sich ein höherer Steuerdruck einstellt, wenn durch eine gesteigerte Druckdifferenz zwischen Umgebungsdruck und Ladedruck erhöhter Leistungsbedarf des Ladegebläses 2 und der Abgasturbine 3 und damit erhöhtem Abgasgegendruck in
der Abgasleitung 4 am Ventilteller 10 des
Bypass-Ventiles 9 größere Öffnungskräfte auftreten. Somit wird erreicht, daß bei den üblichen
Schwankungen von Umgebungsdruck und -temperatur eine Einstellung des Ladeluftdruckes für
einen gleichbleibenden Höchstwert der Füllung
und Leistung der Brennkraftmaschine gewährleistet wird.

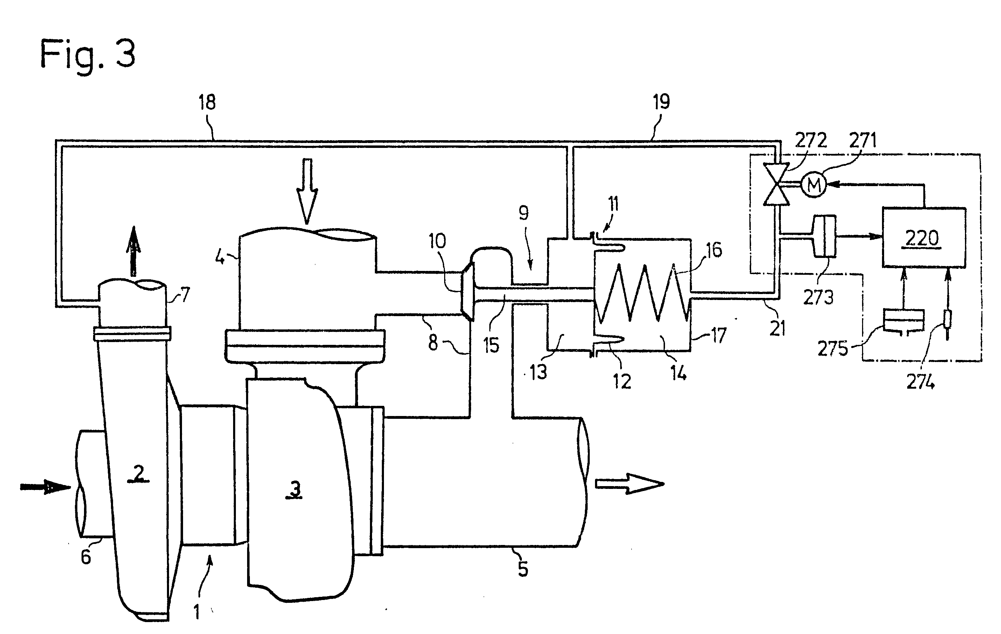

Bei dem in Fig 3 gezeigten Ausführungsbeispiel ist anstelle einer mechanischen eine
elektronische Drucksteuervorrichtung 220 vorgesehen. Die elektronische Drucksteuervorrichtung 220 steuert ein Druckregelventil 272 an, das
mit einem elektrischen Stellantrieb 271 versehen
ist. Ein Meßwertgeber 273 für den Steuerdruck,
ein zweiter Meßwertgeber 274 für die Umgebungstemperatur und ein dritter Meßwertgeber
275 für den Umgebungsdruck beeinflussen die
Regelung. In der elektronischen Drucksteuervorrichtung 220 wird der Ist-Wert des Steuerdrukkes mit einem Soll-Wert verglichen, der durch
eine geeignete Schaltung bei sinkendem Umgebungsdruck und steigender Umgebungstemperatur zum gleichen Zweck wie zu Fig. 2 beschrieben, erhöht wird und umgekehrt. Daraus wird in
der elektronischen Drucksteuervorrichtung 220
ggf. ein Steuersignal erzeugt, das den elektrischen Stellantrieb 271 des Druckregelventiles
272 ansteuert. Durch Eingabe eines auf die
Umgebungstemperatur- und -druckänderungen
abgestimmten Soll-Wertverlaufes wird mit dieser Drucksteuervorrichtung 220 der gewünschte
höchste Füllungsgrad der Brennkraftmaschine
geregelt.

### Patentansprüche

1. Ladedruck-Regelvorrichtung für Brennkraftmaschinen

— mit einem Abgasturbolader und einem
  Bypass-Ventil (10),
— das eine Bypass-Leitung (8) zur Abgasturbine steuert und
— auf dessen Stellantrieb der Ladedruck in
  Öffnungsrichtung sowie ein vom Ladedruck
  abgeleiteter, von einer Drucksteuervorrichtung (20, 120, 220) bestimmter Steuerdruck
  gemeinsam mit einer Schließfeder (16) in
  Schließrichtung einwirkt,

dadurch gekennzeichnet,

— daß die Drucksteuervorrichtung (20; 120;
  220) den Steuerdruck bei sinkendem Umgebungsdruck auf einen mindestens gleichbleibend hohen Wert einstellt.

2. Ladedruck-Regelvorrichtung nach Anspruch
1,

— bei der die Drucksteuervorrichtung den
  Steuerdruck temperaturabhängig verändert, dadurch gekennzeichnet,
— daß der Steuerdruck in Abhängigkeit von
  der Umgebungstemperatur eingestellt wird.

3. Ladedruck-Regelvorrichtung nach Anspruch
2, dadurch gekennzeichnet,

— daß mit steigender Umgebungstemperatur
  ein steigender Steuerdruck eingestellt wird.

4. Ladedruck-Regelvorrichtung nach Anspruch
1, dadurch gekennzeichnet,

— daß die Drucksteuervorrichtung (20; 120)
  eine Druckdose (24; 124) aufweist,
— deren bewegliche Stirnseite (135) ein Abblase-Steuerventil (25, 26; 140—154) betätigt.

5. Vorrichtung nach Anspruch 4, dadurch
gekennzeichnet,

— daß das Abblase-Steuerventil (25, 26;
  140—154) zusätzlich mittels einer umgebungstemperaturabhängig veränderlichen
  Feder, wie einer Bimetallfeder (29; 159)
  beeinflußbar ist.

6. Vorrichtung nach Anspruch 1 und 4,

— deren Bypass-Ventil einen vom Abgasdruck
  im Abgasturbineneinlauf in Öffnungsrichtung beaufschlagten Ventilteller aufweist,
— deren Drucksteuervorrichtung eine dem
  Umgebungsdruck ausgesetzte Druckdose
  sowie
— ein zum Umgebungsdruck in Richtung zur
  Druckdose hin mittels eines Rollbalges
  beweglich angeordnetes Abblaseventil aufweist,

dadurch gekennzeichnet

— daß die Stirnfläche (135) der Druckdose
  (124) größer als eine vom Umgebungsdruck
  beeinflußte Stirnfläche (Kolben 141) des
  Abblaseventiles (140—154) ist,
— wobei dieser Flächenunterschied auf die
  Fläche des Ventiltellers (10) des Bypass-
  Ventiles (9) und den darauf einwirkenden
  mit fallendem Umgebungsdruck steigenden
  Abgasdruck derart abgestimmt ist, daß die
  am Ventilteller (10) angreifende, erhöhte
  Gasdruckkraft durch einen erhöhten Steuerdruck ausgeglichen wird.

7. Vorrichtung nach Anspruch 1, dadurch
gekennzeichnet,

— daß die Drucksteuervorrichtung als elektronische Drucksteuervorrichtung (220) ausgebildet ist und einen Meßwertgeber (273) für den Steuerdruck und ein von der Drucksteuervorrichtung beherrschtes Druckregelventil (272) aufweist.

8. Vorrichtung nach Anspruch 7, dadurch gekennzeichnet,

— daß die Drucksteuervorrichtung (220) einen Meßwertgeber (275) für den Umgebungsdruck aufweist.

9. Vorrichtung nach Anspruch 2 und 7, dadurch gekennzeichnet,

— daß die Drucksteuervorrichtung einen Meßwertgeber (274) für die Umgebungstemperatur aufweist.

## Claims

1. Apparatus for regulating the boost pressure in internal combustion engines

— comprising an exhaust gas turbo-supercharger and a by-pass valve (10),
— which controls a by-pass pipe (8) leading to the exhaust gas turbine and
— the setting drive of which is acted upon by the boost pressure in the direction for opening as well as by a control pressure derived from the boost pressure and determined by a pressure-control means (20, 120, 220), together with a closing spring (16), in the direction for closing,

characterized in that

— the pressure-control means (20; 120; 220) adjusts the control pressure to an at least constantly high value when the surrounding pressure drops.

2. Apparatus for regulating boost pressure according to claim 1,

— wherein the pressure-control means alters the control pressure in dependence upon temperature, characterized in that
— the control pressure is adjusted in dependence upon the surrounding temperature.

3. Apparatus for regulating boost pressure according to claim 2, characterized in that

— a rising control pressure is established as the surrounding temperature rises.

4. Apparatus for regulating boost pressure according to claim 1, characterized in that

— the pressure-control means (20; 120) comprises a pressure box (24; 124),
— the movable end-face (135) of which actuates a blow-off control valve (25, 26; 140—154).

5. Apparatus according to claim 4, characterized in that the blow-off control valve (25, 26; 140—154) can be additionally acted upon by means of a spring, such as a bimetal spring (29; 159), which changes its position in dependence upon the surrounding temperature.

6. Apparatus according to claims 1 and 4,

— the by-pass valve of which comprises a valve disc acted upon in the direction for opening by the exhaust gas pressure in the exhaust gas turbine intake,
— and the pressure-control means of which has a pressure box subjected to the surrounding pressure, as well as
— a blow-off valve arranged to be movable by the surrounding pressure in the direction of the pressure box by means of a rolling bellows,

characterized in that

— the end-face (135) of the pressure box (124) is greater than an end-face (piston 141) of the blow-off valve (140—154) which is acted upon by the surrounding pressure,
— this difference in faces being adapted to the area of the valve disc (10) of the by-pass valve (9) and to the exhaust gas pressure acting thereon and rising as the surrounding pressure drops, the arrangement being such that the increased force of gas pressure applied to the valve disc (10) is offset by an increased control pressure.

7. Apparatus according to claim 1, characterized in that

— the pressure-control means is an electronic pressure-control means (220) and comprises an element (273) for transmitting the measured value of the control pressure and a pressure-regulating valve (272) governed by the pressure-control means.

8. Apparatus according to claim 7, characterized in that

— the pressure-control means (220) comprises an element (275) for transmitting the measured value of the surrounding pressure.

9. Apparatus according to claims 2 and 7, characterized in that

— the pressure-control means comprises an element (274) for transmitting the measured value of the surrounding temperature.

## Revendications

1. Dispositif de régulation de la pression d'alimentation pour moteurs à combustion interne, avec un turboalimentateur sur les gas d'échappement et une soupape de dérivation commandant une canalisation de dérivation vers la turbine à gaz d'échappement et sur la position de réglage de laquelle agit dans le sens de l'ouverture la pression d'alimentation ainsi que dans le sens de la fermeture, en commun avec un ressort de fermeture, une pression de commande dérivée de la pression d'alimentation et déterminée par un dispositif de commande de la pression, dispositif de régulation caractérisé en ce que le dispositif de commande de la pression (20; 120; 220) règle la pression de commande lorsque la pression environnante s'abaisse sur une valeur élevée restant au moins constante.

2. Dispositif de régulation de la pression d'alimentation selon la revendication 1, dans lequel le dispositif de commande de la pression modifie la pression de commande en fonction de la température, dispositif caractérisé en ce que la pression de commande est réglée en fonction de la température environnante.

3. Dispositif de régulation de la pression d'alimentation selon la revendication 2, caractérisé en ce que lorsque la température environnante augmente, une pression de commande croîssante est réglée.

4. Dispositif de régulation de la pression d'alimentation selon la revendication 1, caractérisé en ce que le dispositif de commande de la pression (20; 120) comporte une capsule manomètrique (24; 124), dont la face frontale mobile (135) actionne un soupape de commande d'écoulement des gaz (25, 26; 140—154).

5. Dispositif selon la revendication 4, caractérisé en ce que la soupape de commande de l'écoulement des gaz (25, 26; 140—154) est en outre susceptible d'être influencée par un ressort dont la précontrainte se modifie en fonction de la température environnante, tel qu'un ressort à bilame (29; 159).

6. Dispositif selon les revendications 1 et 4, dont la soupape de dérivation comporte un clapet de soupape sollicité dans la direction d'ouverture par la pression des gaz d'échappement dans l'entrée de la turbine à gaz d'échappement, dont le dispositif de commande de la pression comporte une capsule manomètrique exposée à la pression environnante, ainsi qu'une soupape d'écoulement des gaz disposée mobile au moyen d'un soufflet roulant par rapport à la pression environnante en direction de la capsule manomètrique, dispositif caractérisé en ce que la face frontale (135) de la capsule manomètrique (124) est plus grande que la surface frontale influencée par la pression environnante (piston 14) de la soupape d'écoulement (140—154), cette différence de superficie étant harmonisée avec la superficie du clapet de soupape (10) de la soupape de dérivation (9) et avec la pression croissante des gaz d'échappement agissant sur ce clapet lorsque la pression environnante s'abaisse, de façon telle que l'effort accru de la pression de gaz agissant sur le clapet de soupape (10) est compensé par une pression de commande plus élevée.

7. Dispositif selon la revendication 1, caractérisé en ce que le dispositif de commande de la pression revêt la forme d'un dispositif électronique de commande de la pression (220) et comporte un émetteur de valeur de mesure (273) pour la pression de commande et une soupape de régulation de la pression (272) contrôlée par le dispositif de commande de la pression.

8. Dispositif selon la revendication 7, caractérisé en ce que le dispositif de commande de la pression (220) comporte un émetteur de valeur de mesure (275) pour la pression environnante.

9. Dispositif selon les revendications 2 et 7, caractérisé en ce que le dispositif de commande de la pression comporte un émetteur de valeur de mesure (274) pour la température environnante.

# Fig. 1

0 035 691

Fig. 2

Fig. 3